# EUROPÄISCHE PATENTSCHRIFT

(11) **EP 0 908 802 B1**
(45) Veröffentlichungstag und Bekanntmachung des Hinweises auf die Patenterteilung: **16.06.2004**
(21) Anmeldenummer: 98117322.2
(22) Anmeldetag: 12.09.1998
(51) Int. Cl.: G05B 19/042, H04L 29/12

(54) **Verfahren zur Adressierung eines Aktuator-Sensor-Slaves sowie Aktuator-Sensor-Slave und Adressiergerät zur Durchführung des Verfahrens**
Method for addressing an actuator-sensor-slave and actuator-sensor-slave and addressing apparatus for implementing the method
Méthode pour adressage d'un esclave capteur-actionneur et esclave capteur-actionneur et appareil d' adressage pour implementer la méthode

(30) Priorität: 06.10.1997 DE 19743981
(43) Veröffentlichungstag der Anmeldung: 14.04.1999
(73) Patentinhaber: i f m electronic gmbh, D-45127 Essen (DE)
(72) Erfinder: Schiff, Andreas Dr.-Ing., 88097 Eriskirch (DE); Müller Bernhard Dr. rer. nat., 71083 Herrenberg (DE)
(74) Vertreter: Gesthuysen, Hans Dieter, Dipl.-Ing.

(56) Entgegenhaltungen:
- WO-A-96/12993
- DE-A- 19 639 212
- US-A- 5 420 572
- KRIESEL W ET AL: "ASI IM UEBERBLICK" AKTUATOR SENSOR INTERFACE FUER DIE AUTOMATION,1994, Seiten 11-60, XP002062938
- PATENT ABSTRACTS OF JAPAN vol. 016, no. 402 (P-1409), 25. August 1992 & JP 04 133198 A (NITTAN CO LTD), 7. Mai 1992
- PATENT ABSTRACTS OF JAPAN vol. 017, no. 629 (E-1462), 19. November 1993 & JP 05 199243 A (FUJI ELECTRIC CO LTD), 6. August 1993

## Beschreibung

Die Erfindung betrifft ein Verfahren zur Adressierung eines Aktuator-Sensor-Interface-Slaves mit einem Adressiergerät gemäß dem Oberbegriff des Patentanspruchs 1. Die Erfindung betrifft außerdem einen Aktuator-Sensor-Interface-Slave zum Anschluß an ein Aktuator-Sensor-Interface-System gemäß dem Oberbegriff des Patentanspruchs 6.

Vor über fünf Jahren haben eine größere Anzahl namhafter Aktuator-, Sensor- und Steuerungshersteller sowie zwei Hochschuleinrichtungen mit der industriellen Gemeinschaftsentwicklung eines Aktuator-Sensor-Interface-Systems begonnen, welches als AS-Interface-System bezeichnet wird; nachfolgend wird für Aktuator-Sensor-Interface stets abgekürzt AS-Interface gesagt. Das AS-Interface-System wird als neuartige Schnittstelle für die industrielle Kommunikation eingesetzt und belegt den Bereich unterhalb der bisherigen Feldbussysteme. Es verbindet insbesondere binäre Aktuatoren und Sensoren über eine Sammelleitung mit der ersten Steuerungsebene, z. B. einer SPS oder einem PC.

Das AS-Interface-System besteht aus mehreren AS-Interfae-Slaves, einem AS-Interface-Master und einer AS-Inerface-Leitung. Kernstück des AS-Interface-Systems ist ein AS-Interface-Chip, mit dem die Aktuatoren bzw. Sensoren an die AS-Interface-Leitung digital angekoppelt werden. Der AS-Interface-Chip wird konstruktiv entweder in ein Modul eingebaut, an das dann konventionelle Aktuatoren und Sensoren angeschlossen werden, oder er wird direkt in den Aktuator bzw. Sensor eingebaut. Der AS-Interface-Master bildet die Schnittstelle zwischen den Aktuatoren bzw. Sensoren und dem Kern der Steuerung, beispielsweise einem PC oder einer SPS. Die AS-Interface-Leitung ist im allgemeinen ein ungeschirmtes Zwei-Leiter-Flachbandkabel oder ein Standard-Rundkabel, über das gleichzeitig Signale und Energie übertragen werden. In jedem Abfragezyklus werden Informationen vom Master zu jedem Slave und zurück seriell übertragen. Sie können als Ein- oder als Ausgabedaten benutzt werden. Einzelheiten des zuvor beschriebenen AS-Interface-Systems sind aus Kriesel W. et al. "ASI IM ÜBERBLICK" AKTUATOR SENSOR INTERFACE FÜR DIE AUTOMATION, 1994, Seiten 11 - 60 bekannt.

Bevor eine Anlage mit einem AS-Interface-System erstmalig in Betrieb genommen wird, müssen alle angeschlossenen AS-Interface-Slaves mit ihrer Betriebsadresse versehen werden. Für die Adressierung eines AS-Interface-Slaves gibt es bisher drei Möglichkeiten:
1. Die Adressierung erfolgt durch einen speziellen Masteraufruf über die normale AS-Interface-Leitung. Voraussetzung hierfür ist, daß zum einen der zu adressierende AS-Interface-Slave mit der Betriebsadresse 0 versehen ist, zum anderen darf sich während des Adressiervorgangs immer nur ein AS-Interface-Slave mit der Adresse 0 an der AS-Interface-Leitung befinden.
2. Die Adressierung erfolgt über ein separates Adressiergerät. Der AS-Interface-Slave wird dazu aus dem AS-Interface-System entfernt und auf das Adressiergerät aufgesteckt, die Adresse eingeschrieben und anschließend wieder in das AS-Interface-System eingefügt.
3. Die Adressierung erfolgt über einen Adressierstecker zusammen mit einem Adressiergerät. Hierbei verfügt der AS-Interface-Slave über einen standardisierten Adressiersteckeranschluß, der, sobald das Adressiergerät über einen passenden Stecker angeschlossen wird, den AS-Interface-Slave vom AS-Interface-System trennt. Der AS-Interface-Slave wird während des Adressiervorgangs vom Adressiergerät mit Energie versorgt.

Alle drei Möglichkeiten der Adressierung eines AS-Interface-Slaves sind relativ umständlich und haben darüber hinaus noch unterschiedliche Nachteile. Die Adressierung über den Masteraufruf ist vielfach fehleranfällig und zeitaufwendig und ist zudem dadurch eingeschränkt, daß nur immer ein AS-Interface-Slave mit der Adresse 0 an der AS-Interface-Leitung angeschlossen werden darf. Bei der Adressierung mit einem Adressiergerät ist nachteilig, daß alle elektrischen Verbindungen des AS-Interface-Slaves gelöst werden müssen, um die Adressierung durchzuführen. Außerdem erfordert die Vielzahl der auf dem Markt erhältlichen Bauformen von AS-Interface-Slaves eine ständige Anpassung des Anschlußadapters des Adressiergeräts. Bei der dritten Möglichkeit der Adressierung mit Hilfe eines am AS-Interface-Slave vorhandenen Adressiersteckers ist nachteilig, daß der Adressierstecker relativ viel Platz auf der Frontplatte des AS-Interface-Slaves benötigt und bei AS-Interface-Slaves mit einer hohen Schutzart eine aufwendige und damit kostspielige Abdeckung erforderlich macht. Das Öffnen und sorgfältige Schließen einer solchen Abdeckung ist zum einen zeitaufwendig, zum anderen ist ein solcher mechanischer Kontakt besonders bei hoher Vibrationsbelastung nicht besonders zuverlässig.

Aus der JP 04 133198 A ist ein Feuermelder bekannt, der zur einfacheren Funktionsüberprüfung durch eine Person ein optisches Sende- und Empfangsmittel aufweist, über das Signale von einem drahtlosen Computer empfangen oder an diesen gesendet werden können. Drahtlose Schnittstellen für Feldgeräte sind darüber hinaus auch aus der WO 96/12993 bekannt, wobei jedoch weder die JP 04 133198 A noch die WO 96/12993 ein Verfahren zur Adressierung eines AS-Interface-Slaves oder ein AS-Interface-Slave betreffen.

Es ergibt sich somit die Aufgabe, ein Verfahren zur Adressierung eines AS-Interface-Slaves sowie ein AS-Interface-Slave zur Verfügung zu stellen, bei dem die Adressierung auf einfache und dennoch sichere Art und Weise erfolgen kann..

Diese Aufgabe ist erfindungsgemäß bei einem Verfahren zur Adressierung eines AS-Interface-Slaves zunächst dadurch gelöst, daß zusätzlich zu einer Schnittstelle für die AS-Interface-Leitung eine Adressierschnittstelle für die Eingabe einer den AS-Interface-Slave kennzeichnenden Adresse mit dem AS-Interface-Chip verbunden wird, wobei die Adressierschnittstelle von dem Adressiergerät durch Lichtwellen Informationen erhält und/oder an dieses sendet, und daß eine Umschaltlogik einerseits mit dem AS-Interface-Chip und andererseits sowohl mit dem AS-Interface-System als auch mit der Adressierschnittstelle verbunden ist und die Umschaltlogik nach Anlegen der Betriebsspannung oder nach Ausführung eines RESET-Kommandos die beiden Empfangskanäle auf das Eintreffen eines gültigen AS-Interface-Masteraufrufes überwacht.

Hierbei wird unter Lichtwellen sowohl Licht aus dem sichtbaren als auch solches aus dem unsichtbaren, insbesondere aus dem infraroten Wellenlängenbereich verstanden. Die Übertragung der Lichtwellen vom Adressiergerät zur Adressierschnittstelle bzw. umgekehrt wird dabei in den meisten Fällen durch Luft erfolgen, kann jedoch auch in besonderen Anwendungsfällen über Lichtwellenleiterkabel geschehen.

Die wesentlichen Vorteile der Erfindung bestehen darin, daß die Adressierungen durch Übertragung der Informationen auf optischem Wege erfolgen, somit keine mechanischen Kontakte erforderlich sind, und der AS-Interface-Slave für den Adressiervorgang auch nicht aus dem AS-Interface-System ausgebaut werden muß. Außerdem wird durch Lichtwellen, die die neue Adresse vom Adressiergerät über die Adressierschnittstelle zum AS-Interface-Chip übertragen, die Schutzart des AS-Interface-Slaves nicht beeinträchtigt.

Dadurch, daß eine Umschaltlogik einerseits mit einem AS-Interface-Chip und andererseits sowohl mit dem AS-Interface-System als auch mit der Adressierschnittstelle verbunden ist und daß diese Umschaltlogik nach Anlegen der Betriebsspannung oder nach Ausführung eines RESET-Kommandos die beiden Empfangskanäle auf das Eintreffen eines gültigen AS-Interface-Masteraufrufes überwacht, wird dann, wenn ein gültiger AS-Interface-Masteraufruf auf einem der beiden Empfangskanäle detektiert wird, dieser dauerhaft mit dem AS-Interface-Chip verbunden und der andere Empfangskanal abgeschaltet. Hierdurch ist sichergestellt, daß im Normalbetrieb, bei dem ein ständiger Informationsaustausch zwischen dem AS-Interface-Master und dem AS-Interface-Slave stattfindet, der Empfangskanal der Umschaltlogik, welcher mit der Adressierschnittstelle verbunden ist, abgeschaltet ist, so daß es nicht möglich, ist unbeabsichtigt oder durch ein Fehlsignal die Adresse eines AS-Interface-Slaves zu verändern.

Gegenständlich ist die der Erfindung zugrundeliegende Aufgabe, insbesondere in Verbindung mit dem erfindungsgemäßen Verfahren im wesentlichen dadurch gelöst, daß der AS-Interface-Slave eine optische Adressierschnittstelle und eine mindestens zwei Eingangskanäle aufweisende Umschaltlogik aufweist, wobei die Umschaltlogik einerseits mit dem AS-Interface-Chip und andererseits sowohl über die AS-Interface-Leitung mit dem AS-Interface-System als auch mit der Adressierschnittstelle verbunden ist. Durch die Umschaltlogik ist dabei nach Anlegen der Betriebsspannung oder nach Ausführung eines RESET-Kommandos eine Überwachung der beiden Empfangskanäle auf das Eintreffen eines gültigen AS-Interface-Masteraufrufes möglich.

Die Adressierschnittstelle kann entweder aus einem optischen Sender und einem optischen Empfänger oder nur aus einem optischen Empfänger bestehen. Letzteres ist dann möglich, wenn die Umschaltlogik in den AS-Interface-Chip integriert ist.

Vorteilhafterweise ist der optische Sensor und/oder der optische Empfänger der Adressierschnittstelle unter mindestens einer optische Wellen durchlassenden Abdekkung angeordnet. Die Abdeckung kann vorteilhafterweise als optisches Bandfilter ausgebildet sein, so daß eine ungewollte Beeinflussung durch Streulicht vermieden wird. Demselben Zwecke kann die Verwendung von Sendern und Empfängern dienen, die Lichtwellen im infraroten Bereich aussenden bzw. empfangen. Auch hier wird, durch die Empfindlichkeit des Empfängers lediglich im infraroten Bereich, eine negative Beeinflussung durch Streulicht von in der Nähe angeordneten "normalen" Lichtquellen verhindert.

Nach einer weiteren Ausgestaltung der Erfindung kann der Sender der Adressierschnittstelle als Leuchtdiode ausgeführt sein, die im Normalbetrieb zur Anzeige von Fehlerzuständen des AS-Interface-Slaves genützt wird. Unter Normalbetrieb des AS-Interface-Slaves wird dabei der Zustand verstanden, bei dem keine Adressierung des AS-Interface-Slaves erfolgt. Bei AS-Interface-Slaves, die mit einem Mikrokontroller ausgestattet sind, kann die Adressierschnittstelle von dem Mikrokontroller dazu verwendet werden, wichtige Daten, wie z. B. die Slaveadresse oder den ID-Code, aus dem AS-Interface-Chip auszulesen.

Ein Adressiergerät, welches bei einem Verfahren nach der ersten Lehre der Erfindung und zusammen mit einem AS-Interface-Slave nach der zweiten Lehre der Erfindung verwendet wird, weist einen optischen Zusatz, bestehend aus einem optischen Sender und einem optischen Empfänger, auf. Der optische Sender wandelt die zu sendenden AS-Interface-Signale in optische Signale um, während der optische Empfänger die empfangenen Lichtsignale in normale AS-Interface-Signale zurückwandelt. Auch hier können der optische Sender und/oder der optische Empfänger unter einer optische Wellen durchlassenden Abdeckung angeordnet sein.

Im einzelnen gibt es nun eine Vielzahl von Möglichkeiten, das erfindungsgemäße Verfahren und den erfindungsgemäßen AS-Interface-Slave auszugestalten und weiterzubilden. Hierzu wird verwiesen auf die den Patentansprüchen 1 und 6 nachgeordneten Patentansprüche.

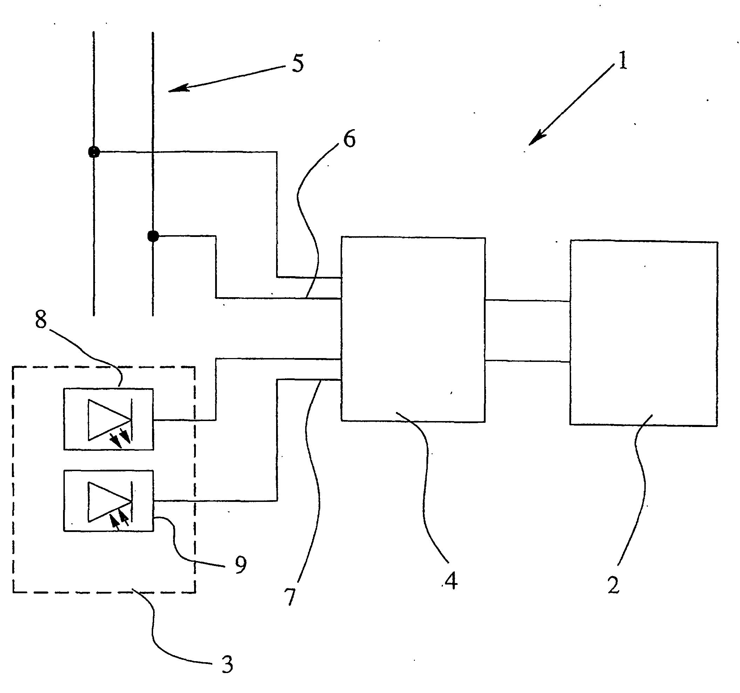

Im folgenden wird die Lehre der Erfindung anhand der einzigen Zeichnung weiter erläutert. Die Zeichnung zeigt ein AS-Interface-Slave 1, welcher sich in einem AS-Interface-System mit einem - hier nicht dargestellten - AS-Interface-Master befindet bzw. an ein solches AS-Interface-System angeschlossen werden kann. Der AS-Interface-Slave 1 weist einen AS-Interface-Chip 2 auf, der einen hochintegrierten elektronischen Schaltkreis darstellt. Der AS-Interface-Chip 2 ist mit einer Adressierschnittstelle 3 verbunden, wobei zwischen der Adressierschnittstelle 3 und dem AS-Interface-Chip 2 noch eine Umschaltlogik 4 geschaltet ist. Diese Umschaltlogik 4 ist, wie schon gesagt, einerseits mit dem AS-Interface-Chip 2 und andererseits sowohl mit dem AS-Interface-System über eine AS-Interface-Leitung 5 als auch mit der Adressierschnittstelle 3 verbunden. Die AS-Interface-Leitung 5 stellt ein Zweidraht-Übertragungssystem dar, über das sowohl der Datenverkehr zwischen dem AS-Interface-Slave 1 und dem AS-Interface-Master als auch die Energieversorgung des AS-Interface-Slaves 1 abgewickelt wird.

Aufgabe der Umschaltlogik 4 ist es, nach dem Anlegen der Betriebsspannung oder nach der Ausführung eines RESET-Kommandos die beiden Empfangskanäle 6, 7 auf das Eintreffen eines gültigen AS-Interface-Masteraufrufes zu überwachen. Detektiert die Umschaltlogik 4 einen gültigen Masteraufruf auf dem Empfangskanal 6, der mit der AS-Interface-Leitung 5 verbunden ist, so wird der Empfangskanal 6 dauerhaft mit dem AS-Interface-Chip 2 verbunden und der Empfangskanal 7 abgeschaltet. Dadurch wird sichergestellt, daß im Normalbetrieb, also dann, wenn der Informationsaustausch zwischen dem AS-Interface-Master und dem AS-Interface-Slave 1 stattfindet, die Adresse des AS-Interface-Slaves 1 vor unbeabsichtigter Änderung geschützt ist.

Die Adressierschnittstelle 3 besteht aus einem optischen Sender 8 und einem optischen Empfänger 9 und stellt über Lichtwellen die Verbindung zu dem hier nicht dargestellten Adressiergerät her. Dieses Adressiergerät weist einen der Adressierschnittstelle 3 ähnlichen optischen Zusatz auf, welcher aus einem optischen Sender und einem optischen Empfänger besteht. Der optische Sender 8 und der optische Empfänger 9 der Adressierschnittstelle 3 befinden sich im eingebauten Zustand unter einer optische Wellen durchlassenden Abdeckung, beispielsweise einer Scheibe oder einem Lichtdom. Diese Abdeckung, die hier nicht dargestellt ist, kann dann so ausgebildet sein, daß sie ein optisches Bandfilter darstellt. Dadurch wird dann die mögliche Gefahr einer ungewollten Beeinflussung der Adressierschnittstelle 3 und damit der Adresse des AS-Interface-Slaves 1 reduziert. Werden als Sendeimpulse Lichtwellen aus dem infraroten Wellenlängenbereich verwendet, so kann eine als optisches Bandfilter ausgebildete Abdeckung Lichtwellen aus dem sichtbaren Bereich daran hindern, auf den optischen Empfänger 9 zu treffen. Dadurch wird eine ungewollte Beeinflussung durch Streulicht von "normalen" Lichtquellen verhindert.

Der optische Sender 8 der Adressierschnittstelle 3 kann als Leuchtdiode ausgeführt sein, die im Normalbetrieb des AS-Interface-Slaves 1, also dann wenn dieser nicht adressiert wird, zur Fehleranzeige des AS-Interface-Slaves 1 genützt wird. Meistens ist diese Leuchtdiode dann als rote Leuchtdiode ausgeführt. Im Gegensatz zu dem hier dargestellten Ausführungsbeispiel kann die Adressierschnittstelle 3 auch nur aus einem optischen Empfänger 9 bestehen, der optische Sender 8 also entfallen.

Ein Adressiervorgang eines AS-Interface-Slaves 1 kann nun wie folgt ablaufen:
1. Der AS-Interface-Slave 1 und alle anderen AS-Interface-Slaves werden montiert, d. h. sie werden an die AS-Interface-Leitung 5 angeschlossen. Befindet sich der AS-Interface-Chip 2 in einem Modul, so werden an dieses konventionelle Aktuatoren und Sensoren angeschlossen. Alternativ kann der AS-Interface-Chip 2 jedoch auch direkt in einem Aktuator bzw. Sensor eingebaut sein. Dann wird dieser Aktuator bzw. Sensor direkt an die AS-Interface-Leitung 5 angeschlossen.
2. Als nächstes wird der AS-Interface-Master "offline" geschaltet und das AS-Interface-Netzgerät wird kurzzeitig aus und dann wieder eingeschaltet, um alle AS-Interface-Slaves 1 zurückzusetzen.
3. Mit einem Adressiergerät können nun alle AS-Interface-Slaves 1 mit ihren Adressen versehen werden. Die Reihenfolge der Adressierung ist dabei beliebig und kann auch jederzeit bei einem bereits mit einer Adresse versehenen AS-Interface-Slave 1 wiederholt werden.
4. Nach Abschluß des Adressiervorganges gibt das Adressiergerät an jeden AS-Interface-Slaves 1 ein RESET-Kommando aus.
5. Als letztes wird der Master wieder "online" geschaltet und nimmt seinen normalen Betrieb auf, d. h. der Informationsaustausch zwischen AS-Interface-Master und AS-Interface-Slaves 1 kann beginnen.

## Patentansprüche

1. Verfahren zur Adressierung eines AS-Interface-Slaves (1) mit einem Adressiergerät, wobei der AS-Interface-Slave (1) einen AS-Interface-Chip (2) aufweist und sich in einem AS-Interface-System mit mehreren AS-Interface-Slaves (1) und mindestens einem AS-Interface-Master befindet oder an ein solches AS-Interface-System angeschlossen werden soll, wobei in dem AS-Interface-System die AS-Interface-Slaves (1) über eine AS-Interface-Leitung (5) mit dem AS-Interface-Master verbunden sind,
**dadurch gekennzeichnet,**
**daß** zusätzlich zu einer Schnittstelle für die AS-Interface-Leitung eine Adressierschnittstelle (3) für die Eingabe einer den AS-Interface-Slave (1) kennzeichnenden Adresse mit dem AS-Interface-Chip (2) verbunden wird, wobei die Adressierschnittstelle (3) von dem Adressiergerät durch Lichtwellen Informationen erhält und/oder an dieses sendet, und
**daß** eine Umschaltlogik (4) einerseits mit dem AS-Interface-Chip (2) und andererseits sowohl mit dem AS-Interface-System als auch mit der Adressierschnittstelle (3) verbunden ist und die Umschaltlogik (4) nach Anlegen der Betriebsspannung oder nach Ausführung eines RESET-Kommandos die beiden Empfangskanäle (6, 7) auf das Eintreffen eines gültigen AS-Interfäce-Masteraufrufes überwacht.

2. Verfahren nach Anspruch 1, **dadurch gekennzeichnet, daß** die Umschaltlogik (4) dann, wenn ein gültiger AS-Interface-Masteraufruf auf einem der beiden Empfangskanäle (6) detektiert wird, diesen dauerhaft mit dem AS-Interface-Chip (2) verbindet und den anderen Empfangskanal (7) abschaltet.

3. Verfahren nach Anspruch 1 oder 2, **dadurch gekennzeichnet, daß** im Normalbetrieb, bei dem ein ständiger Informationsaustausch zwischen AS-Interface-Master und AS-Interface-Slave (1) stattfindet, die Adresse des AS-Interface-Slave (1) vor unbeabsichtigter Änderung geschützt ist.

4. Verfahren nach einem der Ansprüche 1 bis 3, **dadurch gekennzeichnet, daß** allen AS-Interface-Slaves (1) mit Hilfe des Adressiergeräts eine Adresse zugeteilt werden kann und daß das Adressiergerät nach Abschluß des Adressiervorganges an jeden AS-Interface-Slave (1) einen RESET-Befehl aussendet.

5. Verfahren nach einem der Ansprüche 1 bis 4, **dadurch gekennzeichnet, daß** die Adressierung an die AS-Interface-Slaves (1) in beliebiger Reihenfolge erfolgen kann und auch bei einem bereits mit einer Adresse versehenen AS-Interface-Slave (1) wiederholt werden kann.

6. AS-Interface-Slave zum Anschluß an ein AS-Interface-System über eine AS-Interface-Leitung (5), wobei der AS-Interface-Slave (1) einen AS-Interface-Chip (2) und eine Schnittstelle zum Anschluß an die AS-Interface-Leitung (5) enthält, zur Durchführung des Verfahrens nach einem der Ansprüche 1 bis 5,
**dadurch gekennzeichnet,**
**daß** der AS-Interface-Slave (1) zusätzlich zur Schnittstelle für die AS-Interface-Leitung eine optische Adressierschnittstelle (3) und
eine mindestens zwei Eingangskanäle (6, 7) aufweisende Umschaltlogik (4) aufweist,
wobei die Umschaltlogik (4) einerseits mit dem AS-Interface-Chip (2) und andererseits sowohl über die AS-Interface-Leitung (5) mit dem AS-Interface-System als auch mit der Adressierschnittstelle (3) verbunden ist und
wobei die Umschaltlogik (4) nach Anlegen der Betriebsspannung oder nach Ausführung eines RESET-Kommandos die beiden Empfangskanäle (6, 7) auf das Eintreffen eines gültigen AS-Interface-Masteraufrufes überwacht.

7. AS-Interface-Slave nach Anspruch 6, **dadurch gekennzeichnet, daß** die Adressierschnittstelle (3) aus einem optischen Sender (8) und einem optischen Empfänger (9) besteht.

8. AS-Interface-Slave nach Anspruch 7, **dadurch gekennzeichnet, daß** der optische Sender (8) und/oder der optische Empfänger (9) unter mindestens einer optische Wellen durchlassenden Abdeckung angeordnet ist.

9. AS-Interface-Slave nach Anspruch 8, **dadurch gekennzeichnet, daß** die Abdeckung als optisches Bandfilter ausgebildet ist.

10. AS-Interface-Slave nach einem der Ansprüche 6 bis 9, **dadurch gekennzeichnet, daß** der optische Sender (8) der Adressierschnittstelle (3) als Leuchtdiode ausgeführt und im Normalbetrieb zur Anzeige von Fehlerzuständen des AS-Interface-Slaves (1) genützt wird.

11. AS-Interface-Slave nach Anspruch 6, **dadurch gekennzeichnet, daß** die Adressierschnittstelle (3) nur aus einem optischen Empfänger (9) besteht und die Umschaltlogik (4) in dem AS-Interface-Chip (2) integriert ist

12. AS-Interface-Slave nach einem der Ansprüche 6 bis 11, **dadurch gekennzeichnet, daß** die Adressierschnittstelle (3) dazu verwendet wird, wichtige Daten aus dem AS-Interface-Chip (2) auszulesen.

## Claims

1. A method for addressing an AS interface slave (1) using an addressing device, the AS interface slave (1) having an AS interface chip (2) and being located in an AS interface system having multiple AS interface slaves (1) and at least one AS interface master or being connected to such an AS interface system, the AS interface slaves (1) being connected to the AS interface master via an AS interface line (5) in the AS interface system,
**characterized in that**
in addition to an interface for the AS interface line, an addressing interface (3) for inputting an address identifying the AS interface slave (1) is connected to the AS interface chip (2), the addressing interface (3) receiving information from the addressing device and/or sending information thereto through light waves, and
a switchover logic (4) is connected to the AS interface chip (2) and both to the AS interface system and also to the addressing interface (3), and the switchover logic (4) monitors the two receiving channels (6, 7) for the reception of a valid AS interface master call after application of the operating voltage or after execution of a reset command.

2. The method according to Claim 1, **characterized in that** when a valid AS interface master call is detected on one of the two receiving channels (6), the switchover logic (4) connects this channel permanently to the AS interface chip (2) and switches off the other receiving channel (7).

3. The method according to Claim 1 or 2, **characterized in that** in normal operation, in which a continuous information exchange occurs between AS interface master and AS interface slave (1), the address of the AS interface slave (1) is protected from unintentional change.

4. The method according to one of Claims 1 through 3, **characterized in that** all AS interface slaves (1) may be allotted an address with the aid of the addressing device and the addressing device transmits a reset command to each AS interface slave (1) after termination of the addressing procedure.

5. The method according to one of Claims 1 through 4, **characterized in that** the addressing on the AS interface slaves (1) may be performed in any arbitrary sequence and may also be repeated for an AS interface slave (1) already provided with an address.

6. A AS interface slave for connection to an AS interface system via an AS interface line (5), the AS interface slave (1) containing an AS interface chip (2) and an interface for connection to the AS interface line (5), for performing the method according to one of Claims 1 through 5,
**characterized in that**
the AS interface slave (1), in addition to the interface for the AS interface line, has an optical addressing interface (3) and
a switchover logic (4) having at least two input channels (6, 7),
the switchover logic (4) being connected to the AS interface chip (2) and both to the AS interface system via the AS interface line (5) and to the addressing interface (3), and
the switchover logic (4) monitoring the two receiving channels (6, 7) for the reception of a valid AS interface master call after application of the operating voltage or after execution of a reset command.

7. The AS interface slave according to Claim 6, **characterized in that** the addressing interface (3) includes an optical transmitter (8) and an optical receiver (9).

8. The AS interface slave according to Claim 7, **characterized in that** the optical transmitter (8) and/or the optical receiver (9) is/are positioned under at least one cover transparent to optical waves.

9. The AS interface slave according to Claim 8, **characterized in that** the cover is implemented as an optical band-pass filter.

10. The AS interface slave according to one of Claims 6 through 9, **characterized in that** the optical transmitter (8) of the addressing interface (3) is implemented as a light-emitting diode and is used in normal operation for displaying error states of the AS interface slave (1).

11. The AS interface slave according to Claim 6, **characterized in that** the addressing interface (3) includes only an optical receiver (9) and the switchover logic (4) is integrated into the AS interface chip (2).

12. The AS interface slave according to one of Claims 6 through 11, **characterized in that** the addressing interface (3) is used for the purpose of reading important data out of the AS interface chip (2).

## Revendications

1. Procédé d'adressage d'un esclave à interface AS (1) avec un appareil d'adressage, l'esclave à interface AS (1) présentant une puce à interface AS (2) et se trouvant dans un système à interface AS comportant plusieurs esclaves à interface AS (1) et au moins un maître à interface AS ou devant être raccordé à un tel système à interface AS, les esclaves à interface AS (1) étant reliés dans le système à interface AS par le biais d'une ligne à interface AS (5) au maître à interface AS,
**caractérisé en ce**
**qu'**en plus d'une interface pour la ligne à interface AS, une interface d'adressage (3) pour la saisie d'une adresse caractérisant l'esclave à interface AS (1) est reliée à la puce à interface AS (2), l'interface d'adressage (3) recevant de l'appareil d'adressage par des ondes lumineuses des informations et/ou envoyant des informations à celui-ci, et
en ce qu'une logique d'inversion (4) est reliée d'une part à la puce à interface AS (2) et d'autre part aussi bien au système à interface AS qu'à l'interface d'adressage (3) et la logique d'inversion (4) surveille les deux canaux de réception (6, 7) en vue de l'arrivée d'un appel du maître à interface AS valable après application de la tension de fonctionnement ou après exécution d'une commande RESET.

2. Procédé selon la revendication 1, **caractérisé en ce que** lorsqu'un appel du maître à interface AS valable est détecté sur un des deux canaux de réception (6), la logique d'inversion (4) relie celui-ci de manière permanente à la puce à interface AS (2) et déconnecte l'autre canal de réception (7).

3. Procédé selon la revendication 1 ou 2, **caractérisé en ce qu'**en fonctionnement normal, dans lequel un échange constant d'informations a lieu entre le maître à interface AS et l'esclave à interface AS (1), l'adresse de l'esclave à interface AS (1) est protégée d'une modification intempestive.

4. Procédé selon l'une quelconque des revendications 1 à 3, **caractérisé en ce qu'**une adresse peut être attribuée à tous les esclaves à interface AS (1) à l'aide de l'appareil d'adressage et **en ce que** l'appareil d'adressage émet un ordre RESET à la fin du processus d'adressage à chaque esclave à interface AS (1).

5. Procédé selon l'une quelconque des revendications 1 à 4, **caractérisé en ce que** l'adressage peut s'effectuer sur les esclaves à interface AS (1) dans un ordre quelconque et peut également être répété dans le cas d'un esclave à interface AS (1) déjà pourvu d'une adresse.

6. Esclave à interface AS en vue du raccordement à un système à interface AS par le biais d'une ligne à interface AS (5), l'esclave à interface AS (1) contenant une puce à interface AS (2) et une interface en vue du raccordement à la ligne à interface AS (5), en vue de la réalisation du procédé selon l'une quelconque des revendications 1 à 5,
**caractérisé en ce que**
l'esclave à interface AS (1) présente outre l'interface pour la ligne à interface AS une interface d'adressage optique (3) et
une logique d'inversion (4) présentant au moins deux canaux de réception (6, 7),
la logique d'inversion (4) étant reliée d'une part à la puce à interface AS (2) et d'autre part aussi bien au système à interface AS qu'à l'interface d'adressage (3) par le biais de la ligne à interface AS (5) et
la logique d'inversion (4) surveillant les deux canaux de réception (6, 7) en vue de l'arrivée d'un appel du maître à interface AS valable après application de la tension de fonctionnement ou après exécution d'une commande RESET.

7. Esclave à interface AS selon la revendication 6, **caractérisé en ce que** l'interface d'adressage (3) se compose d'un émetteur optique (8) et d'un récepteur optique (9).

8. Esclave à interface AS selon la revendication 7, **caractérisé en ce que** l'émetteur optique (8) et/ou le récepteur optique (9) sont disposés sous au moins un couvercle laissant passer les ondes optiques.

9. Esclave à interface AS selon la revendication 8, **caractérisé en ce que** le couvercle est réalisé en tant que passe-bande optique.

10. Esclave à interface AS selon l'une quelconque des revendications 6 à 9, **caractérisé en ce que** l'émetteur optique (8) de l'interface d'adressage (3) est réalisé en tant que diode lumineuse et est exploité en fonctionnement normal en vue de l'affichage d'états d'erreurs de l'esclave à interface AS (1).

11. Esclave à interface AS selon la revendication 6, **caractérisé en ce que** l'interface d'adressage (3) ne se compose que d'un récepteur optique (9) et la logique d'inversion (4) est intégrée dans la puce à interface AS (2).

12. Esclave à interface AS selon l'une quelconque des revendications 6 à 11, **caractérisé en ce que** l'interface d'adressage (3) est utilisée pour lire des données importantes à partir de la puce à interface AS (2).
